**Europäisches Patentamt**

**European Patent Office**

**Office européen des brevets**

(19)

(11) Publication number: **0 196 679**

**A2**

(12) # EUROPEAN PATENT APPLICATION

(21) Application number: **86106668.6**

(22) Date of filing: **25.05.83**

(51) Int. Cl.⁴: **H 02 M 3/155**

(30) Priority: 26.05.82 JP 89387/82
01.06.82 JP 93488/82
11.06.82 JP 100166/82
10.09.82 JP 157704/82
30.05.82 JP 79546/82 U
10.09.82 JP 137560/82 U

(43) Date of publication of application:
08.10.86 Bulletin 86/41

(84) Designated Contracting States:
AT DE GB NL

(60) Publication number of the earlier application
in accordance with Art. 76 EPC: **0 095 724**

(71) Applicant: **NIPPON CHEMI-CON CORPORATION**
**No. 167-1, Higashi Ome 1-chome**
**Ome-shi Tokyo 198(JP)**

(72) Inventor: **Shimpo, Tetsuhiko Nippon Chemi-Con**
**Corporation**
**No. 167-1, Higashiome 1-chome**
**Ome-shi Tokyo(JP)**

(72) Inventor: **Fujihata, Isao Nippon Chemi-Con Corporation**
**No. 167-1, Higashiome 1-chome**
**Ome-shi Tokyo(JP)**

(72) Inventor: **Yanase, Atsushi Nippon Chemi-Con**
**Corporation**
**No. 167-1, Higashiome 1-chome**
**Ome-shi Tokyo(JP)**

(74) Representative: **Henkel, Feiler, Hänzel & Partner**
**Möhlstrasse 37**
**D-8000 München 80(DE)**

(54) Switching regulator.

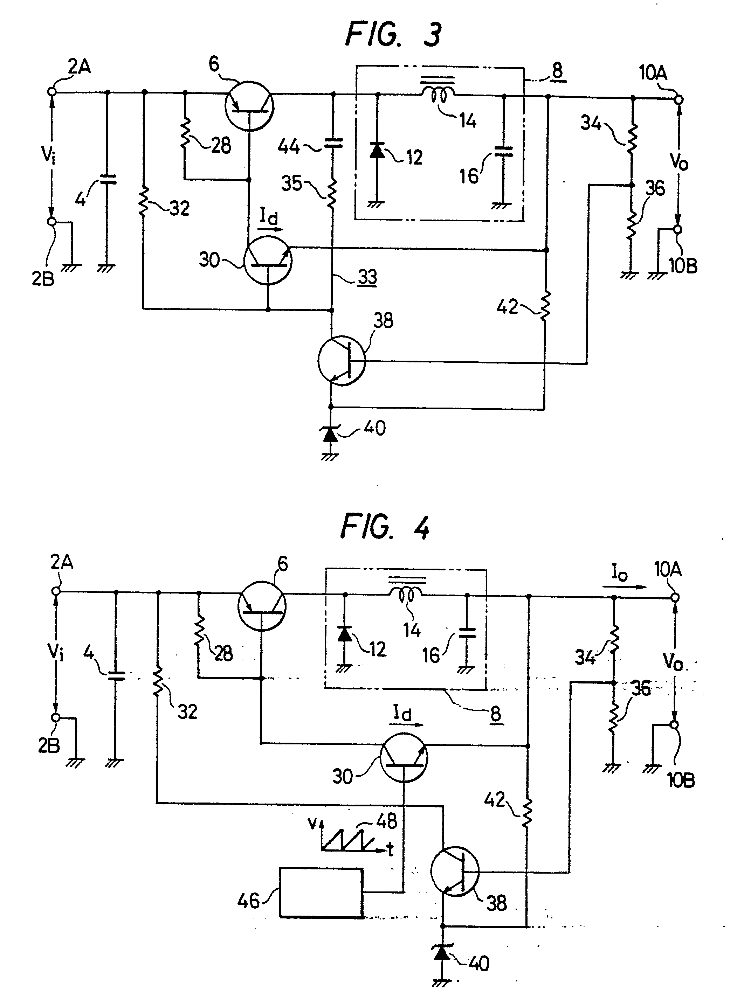

(57) The present invention relates to a switching regulator including a switching transistor (6) for converting a d.c. input to an a.c. voltage, a first transistor (30) for driving said switching transistor (6), a second transistor (38) for detecting a variation in the level of the d.c. output voltage by comparison with a reference voltage and for controlling the switching operation of said first transistor (30) according to the detected variation, and a constant-voltage diode (40) for setting the operating level of said second transistor (Figure 3).

FIG. 3

SWITCHING REGULATOR

The present invention relates to a switching circuit, and more particularly, to a switching regulator having improved transducing efficiency.

Most electronic devices such as video tape recorders (VTR and video cameras, whether they are portable or installed on vehicles, use batteries as driving power. But the terminal voltage of batteries may vary greatly when there occurs a sudden change in the load as a result of mode switching. To suppress these variations and stabilize the operation of the electronic devices, switching regulators are currently used.

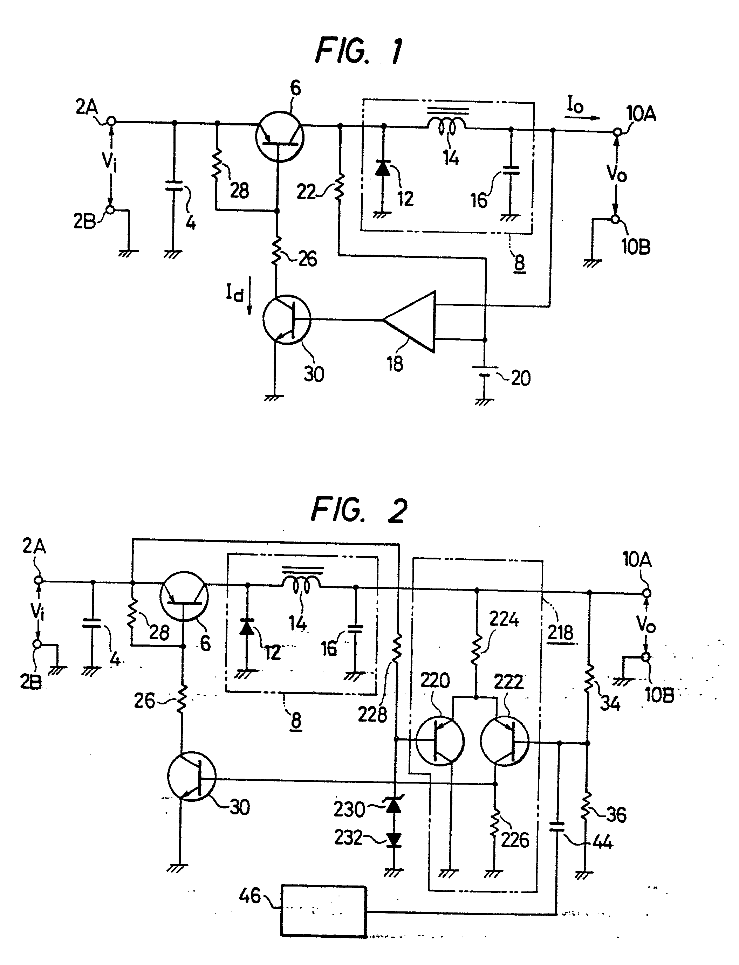

Figs. 1 and 2 show the conventional step-down switching regulators. Specifically, Fig. 1 shows a self-excited type regulator and Fig. 2 shows a separately excited type regulator.

In Fig. 1, a d.c. input Vi supplied across input terminals 2A and 2B has its ripple component removed in a capacitor 4 provided between these input terminals. The input then is converted to an a.c. voltage in a switching transistor 6. The a.c. voltage is rectified in a d.c. reproducing circuit 8 and drawn from output terminals 10A and 10B as a stabilized output Vo. The d.c. reproducing circuit 8 includes a diode 12 as a rectifying element, as well as a choke coil 14 and a capacitor 16 that make up a filter.

The d.c. voltage Vo developing across the terminals 10A and 10B is applied to the inverting input terminal of a comparator 18 and is compared with the reference voltage established at the non-inverting input terminal by a power supply 20. The result of this comparison enables the detection of the variation in the Vo level. An a.c. signal from the collector of the switching transistor 6 is positively fed back to the non-inverting terminal of the comparator 18 through a resistor 22. Therefore, in the conventional switching regulator, the comparator 18 is both an oscillator and an error amplifier. The oscillating output generates pulses having an ON-OFF duty ratio that adaptively changes with the variation in the d.c. output level, and the comparator 18 functions as a pulse width modulating circuit. The output pulse from the comparator 18 is applied to the base of a drive transistor 30 as a switching control pulse. The transistor 30 supplies a drive current Id to the switching transistor 6.

In the pulse duration where the transistor 30 is ON, the drive current Id supplied to the switching transistor 6 is discharged to ground potential through the resistor 26 and transistor 30. The regulator also includes a resistor 28 as a bias resistor for the switching transistor 6.

If the switching regulator of Fig. 1 is operated to produce an output current Io of 5 A with the switching transistor 6 achieving a current amplification hfe of 25, the resulting drive current Id is 200 mA (Id = Io/hfe = 5/25). Since the power loss is the product of input voltage Vi, drive current Id and duty ratio D (P loss = Vi.Id.D), the power loss resulting from this switching regulator is 16 W, assuming an input voltage of 16 V and a pulse duty ratio of 0.5. This power loss is great enough to cause a drop in the tranducing efficiency of the regulator. Since the power loss resulting from the drive current increases in proportion to the input voltage and output current, a switching regulator designed for drawing a relatively large power naturally suffers a great power loss. In the separately excited regulator as shown in Fig. 2, a d.c. input Vi supplied across input terminals 2A and 2B has its ripple component removed in a capacitor 4 between these terminals; the input then is converted to a pulsive a.c. voltage in a switching transistor 6; the a.c. voltage is rectified in a d.c. reproducing circuit 8 corresponding to that of Fig. 1; subsequently, the d.c. voltage is drawn from output terminals 10A and 10B as a stabilized d.c. voltage Vo.

The switching regulator of Fig. 2 further includes an error amplifier 218 that detects a variation in the level of the

d.c. output and generates switching control puses whose width varies with the output level. The error amplifier 218 includes

two transistors 220 and 222 connected to each other at their

emitter which is supplied with the d.c. output through a resistor 224. The collector of the transistor 220 is directly connected to ground potential, whereas the collector of the transistor 222 is connected to ground potential through a resistor 226. For establishing a reference voltage that permits the amplifier 218 to detect a variation in the d.c. output level, a resistor 228, a constant-voltage diode 230 and a diode 232 are connected in series between the d.c. input and ground potential, and the reference voltage formed at the junction between the resistor 228 and
constant-voltage diode 230 is applied to the base of the transistor 220.  The base of the transistor 222 is provided with
a d.c. voltage (to be detected) from the junction between
resistors 34 and 36 connected  in series between output terminals
10A and 10B.  The base of the transistor 222 is also provided
with a triangular or otherwise formed wave from a reference
wave-form generator circuit 46 through a capacitor 44.  As a
result, a pulse width modulated output having a pulse width
varied with the level of the detected d.c. voltage appears at
the collector of the transistor 222.

This pulse width modulated output is supplied to the base
of a transistor 30 as a switching control input.  The collector
of the transistor 30 is connected to the base of the switching
transistor 6 through a resistor 26, and the emitter is connected
to ground potential.  A bias resistor 28 is connected between
the base and emitter of the switching transistor 6.  Therefore, in response to the switching operation of the transistor
30, the switching transistor 6 is provided with the flow of a
pulsive drive current through the resistor 26, and as a
result, the switching transistor 6 performs its switching operation.

The separately  excited switching regulator of Fig. 2
requires the reference wave generator circuit 46 as an external
source of reference waves.  In addition, the error amplifier
218 needs at least two transistors 220 and 222, and the constant-
voltage diode 230 that sets a reference voltage for the transistor 220 must be supplemented with the diode 232 that improves
the temperature-dependent characteristics of the diode 230.

These features make the overall configuration of the regulator complex, necessitate the use of more parts, and add to the cost of the regulator. Recent versions of hand-held electronic devices use ICs to reduce their size and weight, and there is also a demand for not only reducing the size of the switching regulator but also increasing its transducing efficiency in order to reduce the power consumption of the battery.

In the switching regulator of Fig. 1, the switching operation of the transistor 6 has both rise and fall times as well as a certain delay time with respect to a pulsive input. These delay features in pulsing operation cause not only a delay in response time but also a power loss resulting from the current flowing in the delay period (power loss is that current integrated by time). This power loss reduces the efficiency of d.c. to a.c. conversion accomplished by the switching regulator, and to avoid this problem, the delay in the switching time must be eliminated.

This demand for increasing the transducing efficiency of switching regulators has another justification. Recent electronic devices are designed to operate from low voltage, and if the transducing efficiency of switching regulators is low, the service life of the batteries is shortened.

Furthermore, improving the input-output characteristics of switching regulators is essential for stabilizing the electronic devices with which the regulators are used.

Accordingly, it is an object of the present invention to eliminate the above-described drawbacks accompanying the conventional switching regulator and to provide a switching regulator that operates with improved efficiency by causing the drive current to be added to the output current as a result of a very simple design modification and reducing the switching time of the switching transistor.

The present invention enables a switching regulator including a switching transistor for converting a d.c. input to an a.c. voltage, a first transistor for driving said switching transistor a second transistor for detecting a variation in the level of the d.c. output voltage by comparison with a reference voltage and for controlling the switching operation of said first transistor according to the detected variation, and a constant-voltage diode for setting the operation level of said second transistor.

Thus, the above object can be achieved by a switching regulator wherein a transistor for causing a drive current to flow through a switching transistor is provided across a d.c. reproducing circuit between the base of the switching transistor and the output of the d.c. reproducing circuit as so to produce a d.c. output which contains the drive current superposed on the rectified output.

This invention can be more fully understood from the following detailed description when taken in conjunction with the accompanying drawings, is which:

Figs. 1 and 2 are circuit diagrams showing two types of the conventional switching regulators;

Fig. 3 is a circuit diagram showing one embodiment of the present invention;

Fig. 4 is a circuit diagram showing another embodiment of the invention;

Fig. 5 is a circuit diagram showing still another embodiment of the invention;

Fig. 6 shows the waveform of switching pulses produced in the switching circuit of the present invention;

Fig. 7 shows the waveform of a switching pulse produced in the present invention as compared with the waveform of a pulse generated in the conventional circuit;

Fig. 8 is a circuit diagram showing still another embodiment of the invention;

Fig. 9 is a circuit diagram showing still another embodiment of the invention;

Fig. 10 is a circuit diagram showing still another embodiment of the invention;

Fig. 11 is a circuit diagram showing a comparative switching regulator;

Fig. 12 is a graph showing the input-output characteristics of the switching regulator of the embodiment of Fig. 9;

Fig. 13 is a graph showing the input-output characteristics of the switching regulator of Fig. 11; and

Fig. 14 is a circuit diagram showing still another embodiment of the invention.

A preferred embodiment of the switching regulator of the present invention is hereunder described in detail by reference to Fig. 3, wherein the circuit components the same as those shown in Fig. 1 are identified by like numerals. The switching regulator of Fig. 3 has a transistor 30 connected between the base of a switching circuit 6 and the output side of a d.c. reproducing circuit 8 for providing a drive current to the switching transistor 6. The transistor 30 is connected across the d.c. reproducing circuit 8 between the base and collector of the switching transistor 6, with the collector connected to the base of the switching transistor 6.

For detecting a variation in the d.c. output, resistors 34 and 36 are connected in series between output terminals 10A and 10B. The base of a transistor 38 which is equivalent to the comparator 18 of Fig. 1 is connected to the junction between the resistors 34 and 36. The d.c. output applied to the base of the transistor 38 is compared with a threshold voltage that is the sum of the voltage across the base and emitter of the transistor 38 and a reference voltage provided by a constant-voltage diode 40 inserted between the emitter of the transistor 38 and ground potential. The cathode of the constant-voltage diode 40 is connected to the output of the d.c. reproducing circuit 8 through a resistor 42 and is so designed as to provide the reference voltage upon application of the reproduced d.c. voltage.

The collector of the transistor 38 is connected to the base
of the transistor 30, which is connected to the collector of
the switching transistor 6 through a feedback circuit 33 so
that the a.c. signal formed in the switching transistor 6
is positively fed back to the base of the transistor 30 through
the feedback circuit 33. The feedback circuit 33 is composed
of only a reactive element such as a capacitor or the combination
of a reactive element and another element. In this embodiment
shown, the feedback circuit 33 is composed of a capacitor 44
connected in series with a resistor 35. Therefore, the circuit
composed of the transistors 30 and 38 is both an oscillator
and an error amplifier. The collector of the transistor 38 is
provided with a pulse width modulated output having an ON-OFF
duty ratio that adaptively changes to variations in the level
of the d.c. output, and this pulsive output is fed to the
base of the switching transistor 6 as a switching control input.

The switching regulator having the circuit configuration
described above is operated as follows. If the d.c. output
voltage detected at the junction between the resistors 34 and
36 is lower than the threshold voltage established by the
constant-voltage diode 40 and the voltage across the base
and emitter of the transistor 38, the transistor 38 operates
in response to the resulting potential, whereupon the drive
transistor 30 is turned on and a drive current Id flows through
the transistor 6 from the transistor 30. If the d.c. output
voltage detected at the junction between the resistors 34 and
36 is higher than the threshold voltage, the transistor 38 also
operates in response to the resulting potential and the transistor 30 is turned off. This switching operation is repeated consistent at a given oscillating frequency. As a result, the d.c. input Vi is converted to an a.c. voltage by the switching operation of the transistor 6, and the latter is rectified into a d.c. voltage in the d.c. reproducing circuit 8 and is drawn from the output terminals 10A and 10B as a stabilized ... output Vo. If there occurs a variation in the d.c. input on account of load fluctuation or other factors, the switching regulator of the present invention achieves the intended stabilizing operation momentarily and thus keeps supplying a constant d.c. output to the load.

When the transistor 30 is turned on, the drive current Id is fed to the switching transistor 6 through the transistor 30, and this drive current is also supplied to the output side of the d.c. reproducing circuit 8 and forms part of the output current. In other words, not only does the switching regulator of Fig. 3 achieve a switching operation in the conventional manner but also the drive current Id necessary for that switching operation is used as part of the d.c. output. Therefore, the power loss from the drive current is suppressed and its conversion efficiency is greatly improved. Furthermore, the circuit for accomplishing this improvement can be prepared by simply modifying the connection of the drive transistor without adding any special element.

A large drive current is produced by using transistor 6 having low current amplification (hfe) and good switching characteristics. But the switching regulator of the present invention makes effective use of this transistor by reducing the transducer loss with the aid of transistor 30 having high hfe. According to an experiment conducted by the present inventors, a transducing efficiency of about 93% could be attained by drawing the drive current as part of the d.c. output of the switching regulator.

The switching regulator described in the foregoing embodiment is of self-excited type, but equally good results are obtained by configuring a separately excited regulator as shown in Fig 4. The separately excited switching regulator of Fig. 4 has no capacitor 44 in the positive feedback circuit and the base of the drive transistor 30 is provided with a sawtooth or triangular reference wave 48 from a function generator 46, as well as with a variation in voltage level that develops at the collector of the error amplifying transistor 38. The desired control in pulse width can be accomplished by this circuit configuration. The separately excited switching regulator of the type shown in Fig. 4 achieves the same advantages as those of the self-excited type of Fig. 3 without requiring any design modification other than those specified above.

In either embodiment, an npn transistor is advantageously used as transistor 30 because no base current flows, but it should be understood that a pnp transistor can also improve the transducing efficiency by adding the drive current through the switching transistor 6 to the d.c. output. The transistor 38 may also be of pnp type, rather than the npn type used in the

embodiments.

As will be apparent from the foregoing description, the switching regulator of the present invention needs only a simple design modification for superposing the drive current
on the output current so as to improve the transducing efficiency
of the drivice.

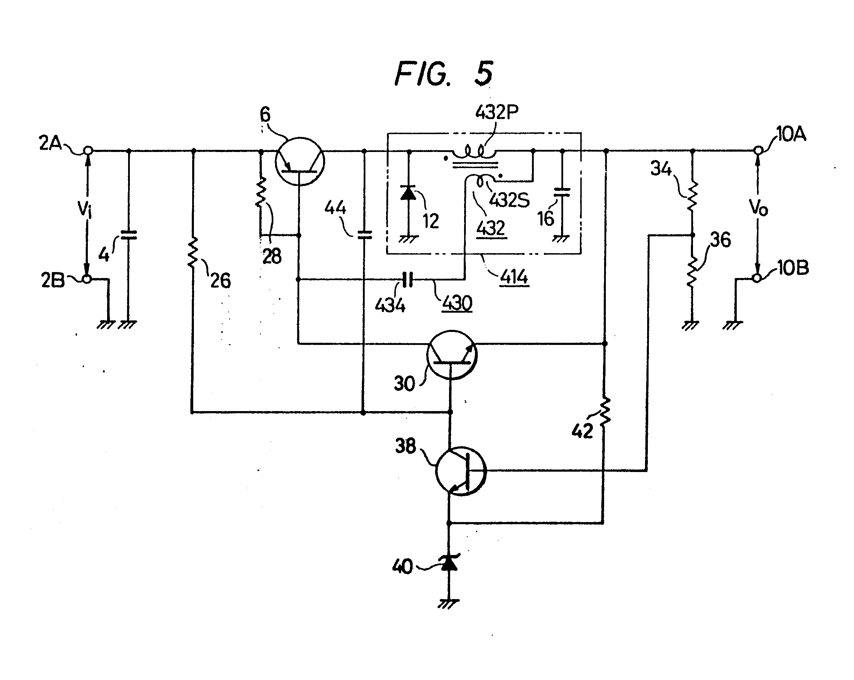

Another embodiment of the invention is described in detail
by reference to Fig. 5.

In Fig. 5, the circuit components the same as those shown
in Figs 1 to 4 are identified by like numerals. The regulator
of fig. 5 has added to a switching transistor 6 a switching co-
rector circuit 430 that reverses the polarity of switching pulses
formed in the transistor 6 and which uses the differentials of
the reversed pulses as part of the control pulse. In the embodiment shown, a transformer 432 included in a d.c. reproducing
circuit 414 as a choke coil reverses the polarity of switching
pulses from the transistor 6, and after being differentiated
in a capacitor 434, those pulses are applied to the base of
the transistor 6. To achieve this object, the transformer
432 has a primary winding 432P and a secondary winding 432S wound
around a common iron core in such a manner that opposite polarities
are produced, and in the embodiment shown, a choke transformer
wherein the respective windings are connected at a common
terminal so that the polarity of an electromotive force induced
in the secondary winding 432S is opposite the polarity of the
input side. The primary winding 432P serves as a choke coil
in the d.c. reproducing circuit 414 as in the conventional
switching regulator, and the output terminal of the secondary
winding 432S is connected to the base of the switching transistor 6
through the capacitor 434.

A drive transistor 30 is connected between the base of the switching transistor 6 and the output terminal of the d.c. reproducing circuit 414. More specifically, the transistor 30 is connected between the base and collector of the switching transistor 6 in such a manner that the collector is connected to the base of the transistor 6 and the emitter to the output of the circuit 414. The base of the transistor 30 is provided with a d.c. bias input through a resistor 26, as well as a switching output that is positively fed back from the collector of the transistor 6 through a capacitor 44.

The base of the transistor 30 is also connected to the collector of a transistor 38 for controlling the operating current flowing through the transistor 30. The emitter of the transistor 38 is connected to a constant-voltage diode 40 for providing a reference voltage. The anode of the diode 40 is connected to ground potential (GND). The emitter of the transistor 38 is also provided with the reproduced d.c. output from the circuit 414 through a resistor 42. The base of the transistor 38 is provided with a d.c. output from the junction between resistors 34 and 36 connected in series between two output terminals 10A and 10B. This d.c. output is compared with a reference voltage that is the sum of the forward voltage on the diode 40 and the voltage across the base and emitter of the transistor 38.

The switching regulator having the circuit configuration described above is operated as follows. If the d.c. output voltage detected at the junction between the resistors 34 and 36 is lower than the reference voltage, the transistor 38 operates in response to the resulting potential whereupon the
transistor 30 is turned on and a drive current flows through
the transistor 6 from the transistor 30. If the d.c.
output voltage detected at the junction between the resistors
34 and 36 is higher than the reference voltage, the transistor
38 operates in response to the resulting potential and the transistor
30 is turned off. This switching operation is repeated
consistently at a given oscillating frequency. As a result,
the d.c. input Vi is converted to an a.c. voltage by the
switching operation of the transistor 6, and the latter is
rectified by the d.c. reproducing circuit 414 and is drawn
from the output terminals 10A and 10B as a stabilized output
Vo. If there occurs a variation in the d.c. input on account
of load fluctuation or other factors, the switching regulator
of the present invention achieves intended stabilizing operation
momentarily and thus keeps supplying a constant d.c. output to
the load.

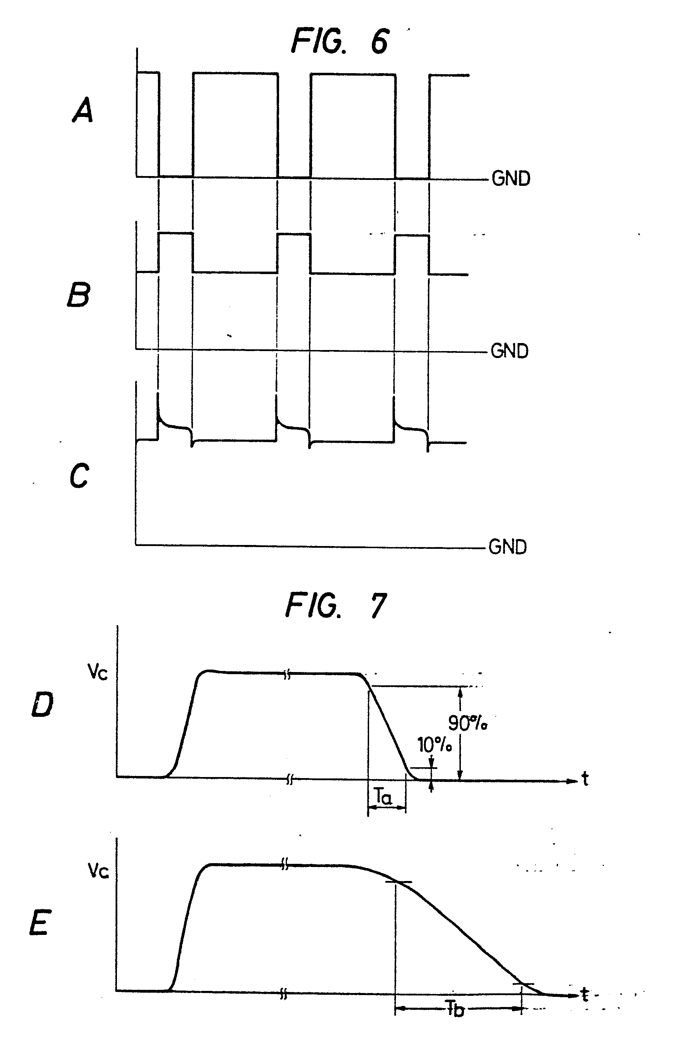

Fig. 6A shows the waveform of pulses that develop at the
collector of the switching transistor 6 as a result of its
switching operation. Since these pulses are applied to the
primary winding 432P of the transformer 432, the secondary
winding 432S produces pulses having their polarity reversed as
shown in Fig. 6B. These pulses are superposed on a given
level of d.c. voltage. They are then applied to the base of
the switching transistor 6 through the capacitor 434, so that the
base of that transistor is provided with differential pulses
as shown in Fig. 6C, together with the control input pulses
coming from the transistor 30. The respective edges of the differential pulses are in good agreement with those of the initial switching pulses, and the leading and trailing edges of each pulse change their potential levels in opposite directions. Therefore, the differential pulses are timed to the switching operation of the transistor 6 and can accelerate the turning-on and off of that transistor. As a result, the switching time of the transistor 6 is shortened and the power loss occurring in the switching period can be reduced so as to increase the transducing efficiency of the switching regulator.

Fig. 7D shows the waveform of a switching pulse produced in the presence of the switching corrector circuit 430 and Fig. 7E shows the waveform of a switching pulse produced in the absence of the circuit 430. Each pulse is shown on an exaggerated time base. The fall time during which the first pulse is decreasing from 90% to 10% of its maximum level Vc is denoted by Ta, and that for the second pulse is denoted by Tb. As is obvious from the drawing, the switching corrector circuit 430 achieves a great reduction in the fall time (Ta<Tb), and this in turn decreases the power loss occurring in the fall time. The reduction in the power loss becomes more marked as the switching frequency is increased, and as a result, a further improvement in the transducing efficiency of the switching regulator is accomplished.

The switching corrector circuit 430 uses the switching pulses generated in the transistor 6, so it suffers no energy loss resulting from its operation. Furthermore, the circuit 430 is made of only the capacitor 434 connected in series with the transformer 432 that also serves as a choke coil. In the

embodiment shown, the transformer 432 is made of a choke transformer which is compact and inexpensive.

As another advantage of the illustrated embodiment, the
drive current Id provided by the transistor 30 to the switching
transistor 6 is added to the reproduced d.c. output, and this
is another factor that increases the transducing efficiency of
the switching regulator of the present invention. According
to an experiment conducted by the present inventors, a
transducing efficiency as high as about 93% could be attained
thanks to the addition of the drive current to the d.c. output
as well as the shortened switching time.

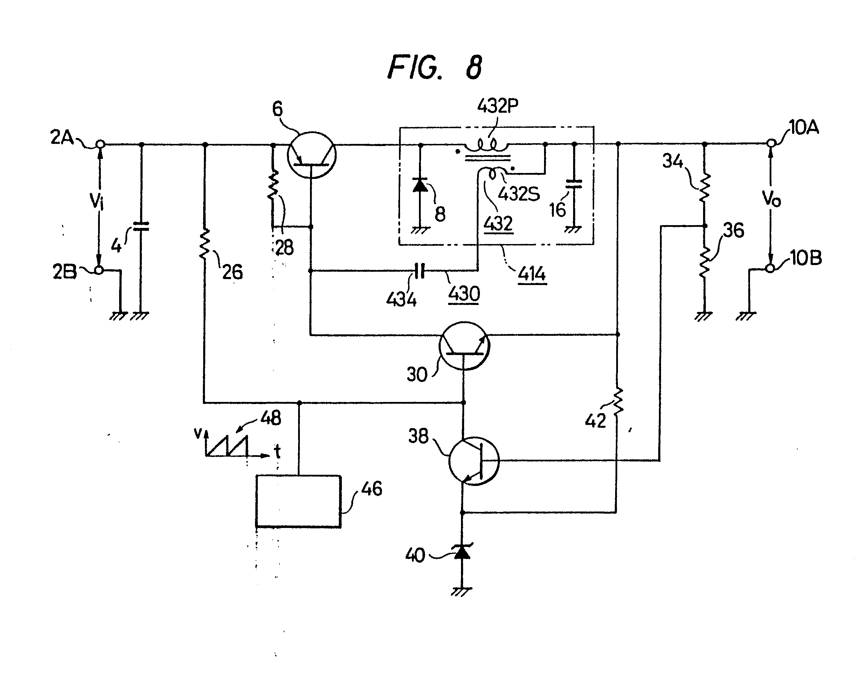

The switching regulator described in the embodiment of
Fig. 5 is of self-excited type, but equally good results are
obtained by configuring a separately excited regulator as shown
in Fig. 8. The separately excited switching regulator of Fig.
8 has no capacitor 44 in the positive feedback circuit and the
base of the drive transistor 30 is provided with a sawtooth
or triangular reference wave 48 from a function generator 46,
as well as with a variation in the voltage level that develops
at the collector of the transistor 38. The desired control
in pulse width can be accomplished by this circuit configuration.
The separately excited switching regulator of the type shown
in Fig. 8 achieves the same advantages as those of the self-excited
type of Fig. 5. In either embodiment, an npn transistor is
advantageously used as drive transistor 30 because no base
current flows, but it should be understood that a pnp transistor
can also improve the transducing efficiency by adding the drive current through the switching transistor 6 to the d.c. output. The transistor 38 may also be of pnp type, rather than the npn type used in the embodiments.

In the embodiments of Figs. 5 and 8, the switching pulses are detected by the choke transformer that also serves as the choke coil in the d.c. reproducing circuit 414, but it should be understood that the same object can be attained by an inductor other than the choke transformer. If desired, the inductor may be connected to some circuit element other than the circuit 414 that enables the detection of switching pulses.

The foregoing description concerns a switching regulator, but it should be understood that the concept of the present invention is applicable to various switching circuits other than the switching regulator of the types shown in the embodiments.

As will be apparent from the above, the present invention shortens the switching time of a switching transistor, so not only does it improve the switching efficiency but it also reduces the power loss resulting from the delayed switching operation.

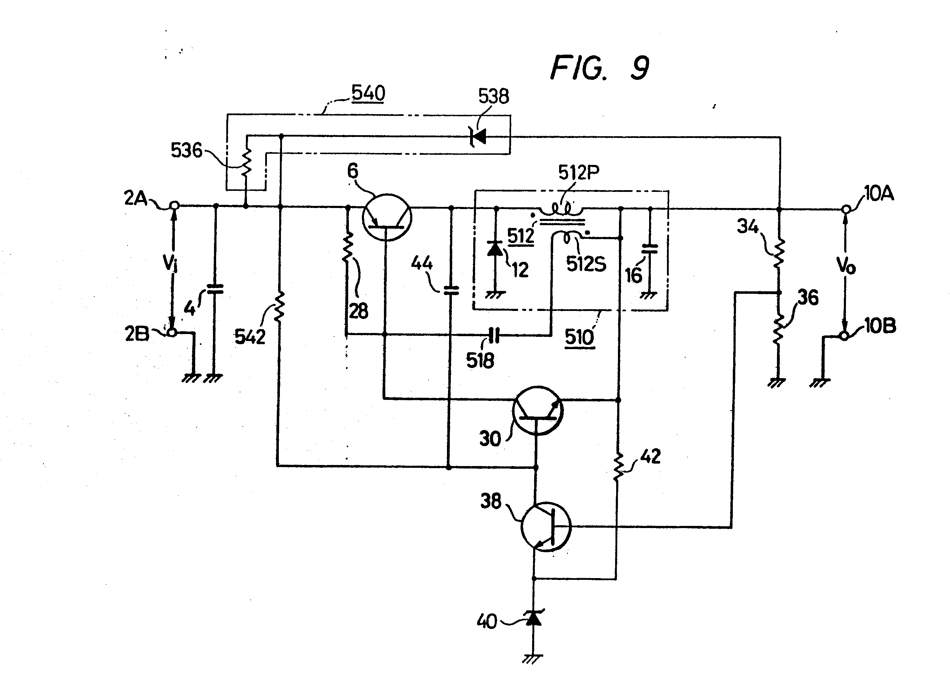

Still another preferred embodiment of the switching regulator of the present invention is hereunder described by reference to Fig. 9. In the embodiment of Fig. 9, a capacitor 4 for absorbing the ripple component of a d.c. input is provided between input terminals 2A and 2B. A switching transistor 6 is connected between input terminal 2A and output terminal 10A on the higher potential side, with the emitter connected to 2A and the collector connected to 10A. The transistor 6 is connected to a d.c. reproducing circuit 510 that reproduces a d.c.
voltage by rectifying the a.c. voltage produced in the
transistor 6. Output terminal 10B and input terminal 2B
are both connected to ground potential (GND).

The d.c. reproducing circuit 510 has a choke coil 512
connected in series to the switching transistor 6, a diode 12
connected between the collector of the transistor 6 and ground
potential, with the collector connected to the cathode, and a
smoothing capacitor 16 connected between the output terminal
of the choke coil 512 and ground potential. The choke coil 512
has a primary winding 512P and a secondary winding 512S which
are so wound that they induce electromotive forces of opposite
polarities. The two windings are connected to 10A by a common
terminal. The other terminal of the secondary winding 512S is
connected to the base of the switching transistor 6 through a
differentiating capacitor 518 so that switching pulses in a differential
waveform are applied to the base of the transistor 6. A bias
resistor 28 is connected between the base and emitter of the
switching transistor 6.

For detecting a variation in the output voltage Vo, two
resistors 34 and 36 are connected in series between the output
terminals 10A and 10B, and the junction between these resistors
is connected to the base of a control transistor 38 that
provides an error amplifier for detecting a variation in the
level of the output voltage Vo and which adaptively controls
a drive transistor 30 provided for driving the switching
transistor 6. A constant-voltage diode 40 is connected between the emitter of the control transistor 38 and ground potential, with the cathode connected to the emitter. The junction between the diode 40 and the emitter of transistor 38 is provided with the output from the d.c. reproducing circuit 510 through a resistor 42.

The drive transistor 30 is connected across the choke coil 512 between the base and collector of the switching transistor 6, with the collector of the transistor 30 connected to the base of the transistor 6. The drive transistor 30 is so designed that upon error detection by the control transistor 38, it supplies a drive current to the base of the transistor 6 to start switching operation. Therefore, the drive transistor 30 provides an oscillating circuit together with the base and collector of the transistor 6 and a capacitor 44, and the width of pulses generated by oscillation is controlled by the operating current flowing through the control transistor 28. Therefore, the drive transistor 30 in combination with the control transistor 38 provides a pulse width modulating circuit.

A constant-voltage circuit 540 made of a resistor 536 connected in series with a constant-voltage diode 538 is connected across the switching transistor 6 and the choke coil 512 between the input terminal 2A and output terminal 10A on the higher potential side. The junction between the resistor 536 and diode 538 is connected through a resistor 542 to the collector of the control transistor 38 and the base of the drive transistor 30. Therefore, the constant-voltage circuit 540 in combination with the resistor 542 provides a constant-current supply circuit that feeds a constant current between the base and emitter of the control transistor 38, and between the base and emitter of the drive transistor 30.

The switching regulator having the circuit configuration described above is operated as follows. When switching pulses generated by the transistor 6 are returned by positive feedback to the base of the drive transistor 30 through the capacitor 44, the transistor 30 starts to oscillate. The base current for the oscillating transistor 30 is controlled by the operation of the control transistor 38. The operating current flowing through the transistor 38 reflects a variation in the output level as detected by comparing the voltage-divided d.c. bias on the base with the reference voltage provided for the emitter by the diode 40. Therefore, the control pulses applied to the base of the transistor 6 form a pulsive signal whose width is modulated according to the variation in the level of the d.c. output. As a result, the transistor 6 starts a switching operation.

The control operations described above are performed continue the d.c. input voltage Vi supplied across the terminals 2A and 2B is converted to switching (a.c.) pulses in the switching transistor 6, and a.c. signal is rectified in the d.c. reproducing circuit 510 and drawn from the output terminals 10A and 10B as a stable d.c. output Vo.

In the switching operation described above, the d.c. input voltage Vi supplied across the terminals 2A and 2B is also fed to the constant-voltage circuit 540, and the voltage developing at the junction between the resistor 536 and diode 538 is constant and higher than the constant voltage at the output terminal 10A by an amount equal to the voltage drop occurring in the diode 538. Since the voltage at the emitter of each of the transistors 38 and 30 is held constant as the output voltage is, a constant operating current will flow to the respective transistors through the resistor 542 connected between the collector of the transistor 38 and the constant voltage site of the circuit 540 and between the base of the transistor 30 and the same constant-voltage site. The constant current flowing through the transistor 38 flows into the constant-voltage diode 40, which, as a result, develops a reference voltage adaptive to the input voltage Vi.

The sum of this reference voltage and the voltage across the base and emitter of the control transistor 38 is compared with the voltage-divided bias on the base of the transistor 38, and the result of this comparison determines the operating current that is to flow through the transistor 30 and controls the output voltage. In consequence, the input-output characteristics of the switching regulator are improved. In the embodiment of Fig. 9, the d.c. output on the higher potential side is used as the reference potential for the constant voltage circuit 540, so the loss or fluctuations that result from the supply of a constant current is minimized.

As a further advantage of the embodiment of Fig. 9, the secondary winding 512S on the choke coil 512 induces pulses whose wave-form is reversed in polarity from the waveform of pulses applied to the primary winding 512P. The induced pulses are differentiated in the capacitor 518 and applied to the base of the transistor 6. Therefore, the base of the transistor 6 is reverse-biased during the switching operation, and this is effective for shortening the switching time.

The drive current returned from the switching transistor 6 flows out of the emitter of the transistor 30 and is supplied to the output of the d.c. reproducing circuit 510, and this reduces the power loss due to the drive current and improves the transducing efficiency of the switching regulator.

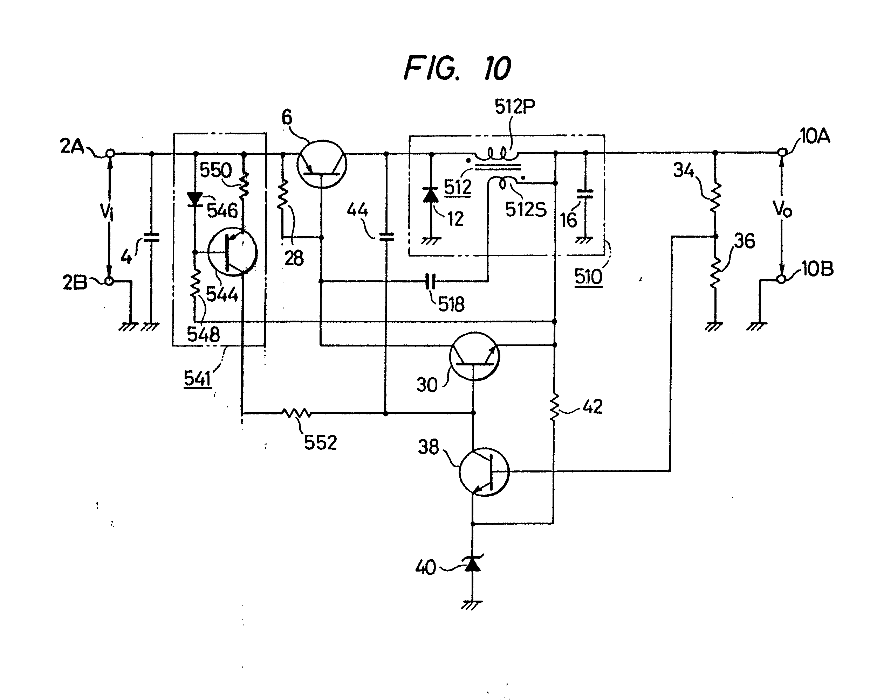

Fig. 10 shows still another embodiment of the present invention, and the circuit components the same as those used in the embodiment of Fig. 9 are identified by like numerals. The switching regulator of Fig. 10 uses a constant-current circuit 541 in place of the constant-voltage circuit 540 used in the embodiment as shown in Fig. 9. The constant-current circuit 541 is composed of a transistor 544, a diode 546 and resistors 548 and 550. The diode 546 and resistor 548 are connected in series across the switching transistor 6 and the d.c. reproducing circuit 510. The junction between the diode 546 and resistor 548 is connected to the base of the transistor 544. The emitter of the transistor 544 is connected to the input terminal 2A through a resistor 550, and the collector is connected to the collector of the transistor 38 through a resistor 552. This arrangement, like that used in the embodiment of Fig. 9, is effective in providing a constant operating current through the control transistor 38 and the drive transistor 30.

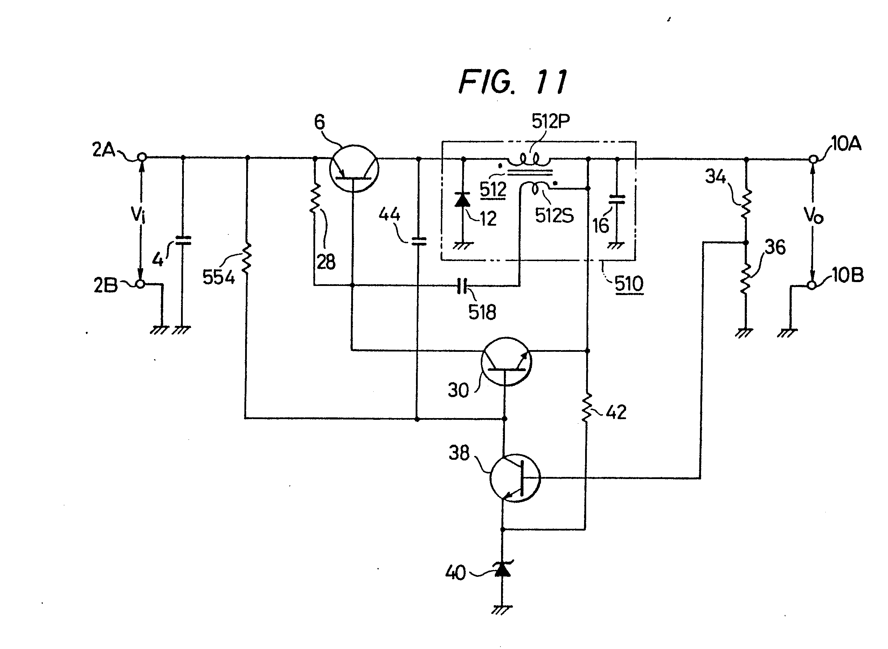

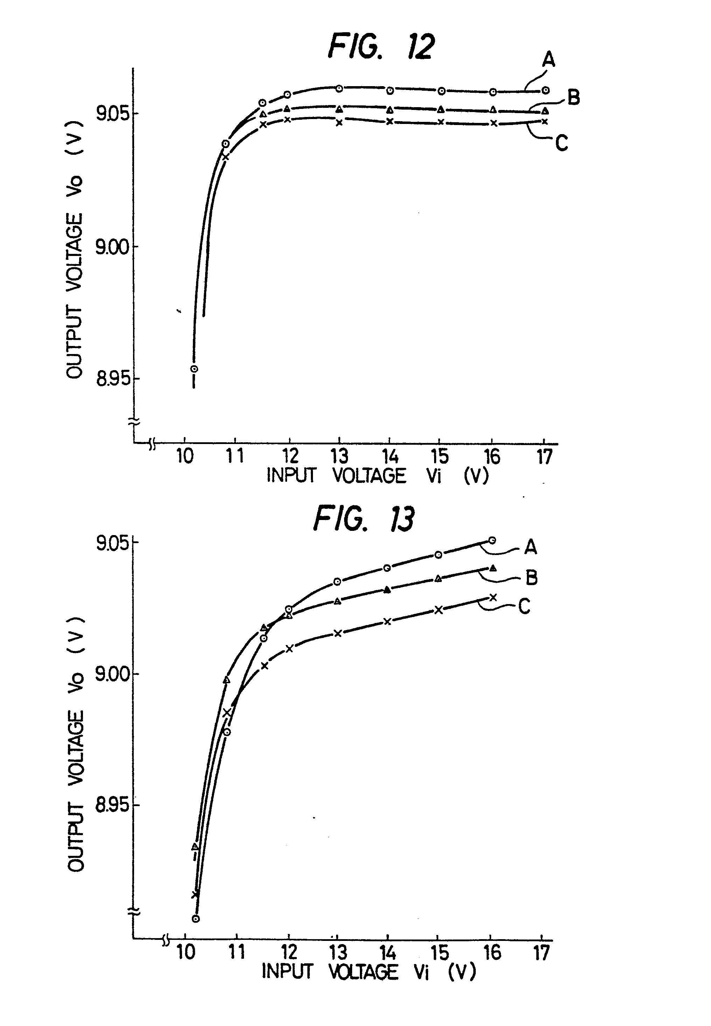

The advantage of the above embodiment is hereunder described in greater detail by reference to Figs. 11 to 13. Fig. 11 shows a comparative switching regulator which is the same as the embodiment of Fig. 9 except that the constant-voltage circuit 540 is replaced by a resistor 554, and the

circuit components the same as those shown in Fig. 9 are identified by like numerals. Fig. 12 shows the input-output characteristics of the switching regulator of Fig. 9, and Fig. 13 depicts those of the circuit shown in Fig. 11. In each of Figs. 12 and 13, three characteristic curves A, B and C are given and they respectively represent the characteristics as measured at -20°C, 25°C and 80°C. As one can readily see, the characteristics shown in Fig. 13 are not stable and the output voltage increases with increasing input voltage, but the characteristics depicted in Fig. 12 are very stable. This data shows how greatly the input-output characteristics of a switching regulator are improved by using the constant-current supply circuit described in this embodiment.

As will be apparent from the foregoing description, the switching regulator of this embodiment has improved input-output characteristics because it is designed to provide a constant operating current through the control transistor and drive transistor. Furthermore, this constant current is provided by using the potential on the d.c. output side as the reference voltage, so a constant-current output is effectively obtained on the d.c. output side without causing a substantial current loss.

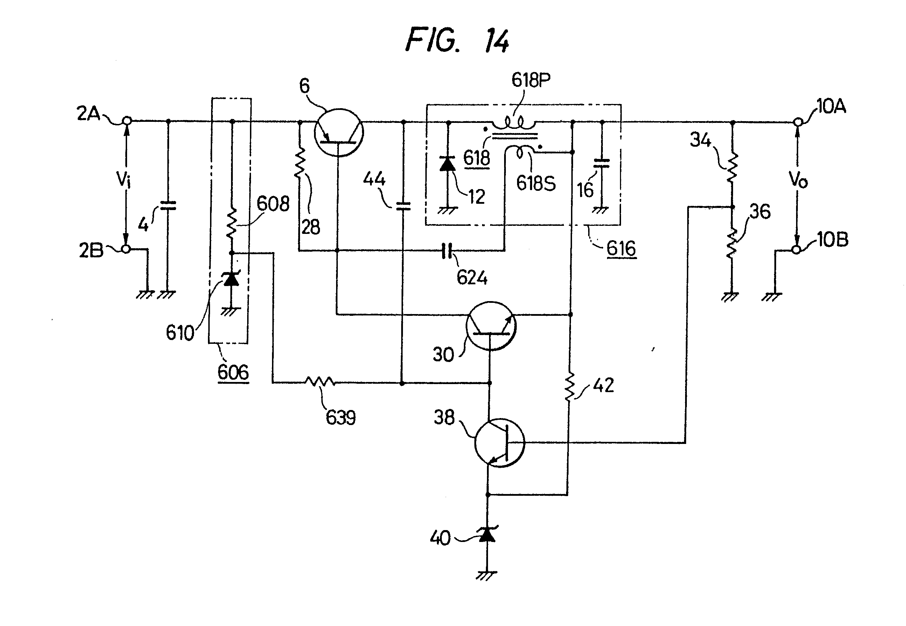

A still another preferred embodiment of the switching regulator of the present invention is hereunder described by reference to Fig. 14. In Fig. 14, the circuit components the same as those shown in the foregoing drawings are identified by like numerals and a constant-voltage circuit 606 for generating a constant voltage upon application of an input

- 24 -

0196679

voltage Vi are provided between two input terminals 2A and 2B. The constant voltage circuit 606 has a resistor 608 and a constant-voltage diode 610 connected in series between the input terminals 2A and 2B.

A switching transistor 6 is connected between the input terminal 2A and an output terminal 10A, with the emitter connected to 2A and the collector connected to 10A. The transistor 6 is connected to a d.c. reproducing circuit 616 that reproduces a d.c. voltage by rectifying the a.c. voltage produced in the transistor 6. Output terminal 10B and input terminal 2B are both connected to ground potential (GND).

The d.c. reproducing circuit 616 has a choke coil 618 connected in series to the switching transistor 6, a diode 12 connected between the collector of the transistor 6 and ground potential, with the cathode connected to the collector, and a smoothing capacitor 16 connected between the output terminal of the choke coil 618 and ground potential. The choke coil 618 has a primary winding 618P and a secondary winding 618S which are so wound that they induce electromotive forces of opposite polarities. The two windings are connected to 10A by a common terminal. The other terminal of the secondary winding 618S is connected to the base of the switching transistor 6 through a differentiating capacitor 624 so that switching pulses in a differential waveform are applied to the base of the transistor 6. A bias resistor 28 is connected between the base and emitter of the switching transistor 6.

For detecting a variation in the output voltage Vo, two resistors 34 and 36 are connected in series between output terminals 10A and 10B, and the junction between these resistors is connected to the base of a control transistor 38 that provides an error amplifier for detecting a variation in the level of the output voltage Vo and which controls the switching operation on the basis of the detected error.  A constant-voltage diode 40 is connected between the emitter of the control transistor 38 and ground potential, with the cathode connected to the emitter.  The junction between the diode 40 and the emitter of transistor 38 is provided with the output from the d.c. reproducing circuit 616 through a resistor 42.

The collector of the control transistor 38 is connected to the base of a drive transistor 30 that actuates the switching operation of the transistor 6.  The collector of transistor 38 is also connected to the junction between the resistor 608 and diode 610 in the constant-voltage circuit 606 through a resistor 639.  Upon application of input voltage Vi, the constant-voltage circuit 606 supplies a constant current to the collector and emitter of the control transistor 38 and the base of the drive transistor 30.

The base of the drive transistor 30 is connected to the collector of the switching transistor 6 through a capacitor 44 so that switching pulses formed in the transistor 6 are positively fed back to the transistor 30.  Therefore, the drive transistor 30 provides an oscillating circuit together with the base and collector of the transistor 6 and the capacitor 44, and the width of pulses generated by oscillation is controlled by the operating current flowing through the control transistor 38. Therefore, the transistor 30 in combination with the transistor 38 provides a pulse width modulating circuit.

The switching regulator having the circuit configuration described above is operated as follows. When switching pulses generated by the transistor 6 are returned by positive feedback to the base of the drive transistor 50 through the capacitor 44, the transistor 30 starts to oscillate. The base current for the oscillating transistor 30 is controlled by the operation of the transistor 38. The operating current flowing through the transistor 38 reflects a variation in the output level as detected by comparing the voltage-divided d.c. bias on the base with the reference voltage provided for the emitter by the diode 40. Therefore, the control pulses applied to the base of the transistor 6 form a pulsive signal whose pulse width is modulated according to the variation in the level of the d.c. output. As a result, the transistor 6 starts a switching operation.

The control operations described above are performed continuously; the d.c. input voltage Vi applied across the terminals 2A and 2B is converted to switching (a.c.) pulses in the switching transistor 6, and the a.c. signal is rectified in the d.c. reproducing circuit 616 and drawn from the output terminals 10A and 10B as a stable d.c. output Vo.

In the switching operation described above, the d.c. input voltage Vi supplied across the terminals 2A and 2B is also fed to the constant-voltage circuit 606, and a constant current flows from the junction between the resistor 608 and diode 610 and goes down through the resistor 639 to the collector of the control transistor 38 and the base of the drive transistor 30. Since the voltage at the emitter of each of the transistors 38 and 30 is held constant by application of the output voltage, the value of this constant voltage and that of the constant voltage developing at the cathode of the diode 610 have such a relationship as to provide a constant current from the junction between resistor 608 and diode 610 through the resistor 639. As a result, a constant operating current flows through each of the transistors 30 and 38, and a reference voltage adaptive to the input voltage Vi develops in the diode 40.

The sum of this reference voltage and the voltage across the base and emitter of the transistor 38 is compared with the voltage-divided bias on the base of the transistor 38, and the result of this comparison determines the operating current that is to flow through the transistor 30 and controls the output voltage. In consequence, the input-output characteristics of the switching regulator are improved.

In the embodiment of Fig. 14, the secondary winding 618S on the choke coil 618 induces pulses whose waveform is reversed in polarity from the waveform of pulses applied to the primary winding 618P. The induced pulses are differentiated in the capacitor 624 and applied to the base of the transistor 6. Therefore, the base of the transistor 6 is reverse-biased during the switching operation, and this is effective for shortening the switching time.

The drive current returned from the switching transistor 6 flows out of the emitter of the transistor 30 and is supplied to the output of the d.c. reproducing circuit 616, and this reduces the power loss due to the drive current and improves the transducing efficiency of the switching regulator.

In the embodiment of Fig. 14, the input-output characteristics is very stable similar to that of Fig. 12.

As will be apparent from the foregoing description, the switching regulator of the this embodiment has improved input-output characteristics because it is designed to provide a constant operating current through the drive transistor and control transistor. As a further advantage, the improved input-output characteristics are stable against temperature variations.

Divisional Appl. 1

## Claims

1. A switching regulator including a switching transistor (6) for converting a d.c. input to an a.c. voltage, a first transistor (30) for driving said switching transistor (6), a second transistor (38) for detecting a variation in the level of the d.c. output voltage by comparison with a reference voltage and for controlling the switching operation of said first transistor (30) according to the detected variation, and a constant-voltage diode (40) for setting the operating level of said second transistor.

2. A switching regulator according to Claim 1, characterized in that the switching pulses generated in said switching transistor (6) are positively fed back to the base of said first transistor (30).

3. A switching regulator according to Claim 1, characterized in that the base of said first transistor (30) is provided with an input from a reference waveform generator circuit (46).

4. A switching regulator according to Claim 1, characterized in that the base of said first transistor (30) is connected to the collector of said second transistor (38).

5. A switching regulator according to Claim 1, characterized in that the anode of said constant voltage diode (40) is connected to ground potential.

6.     A switching regulator according to Claim 1, characterized by constant current supply means for providing a constant operating current through the second transistor (38) and the first transistor (30).

7.     A switching regulator according to Claim 6, characterized in that said constant current supply means has a constant-voltage circuit between an input terminal and an output terminal on the higher potential side, said circuit supplying a constant current to the first transistor (30) and the second transistor (38).

8.     A switching regulator according to Claim 6, characterized in that said constant current supply means includes a constant-voltage circuit between an input terminal and an output terminal on the higher potential side, and a constant-current circuit that produces a constant current in response to a bias input to said constant-voltage circuit.

9.     A switching regulator according to Claim 1, characterized by a constant-voltage circuit which is connected between the input terminals receiving said d.c. input and provides a constant operating current flowing through said first and second transistors (30, 38).

10.    A switching regulator according to Claim 9, characterized in that said constant-voltage circuit is made of a resistor (42) connected in series with a constant-voltage diode (40) and supplies a constant current to said first and second transistors (30, 38) from the junction between said resistor (42) and the diode (40) upon application of an input voltage to said constant-voltage circuit.

## FIG. 1

## FIG. 2

## FIG. 3

## FIG. 4

FIG. 5

## FIG. 6

## FIG. 7

FIG. 8

FIG. 9

0196679

FIG. 10

0196679

FIG. 11

0196679

## FIG. 12

## FIG. 13

0196679

FIG. 14